# EUROPÄISCHE PATENTSCHRIFT

(11) **EP 0 816 439 B1**
(45) Veröffentlichungstag und Bekanntmachung des Hinweises auf die Patenterteilung: **04.10.2000**
(21) Anmeldenummer: 97109289.5
(22) Anmeldetag: 09.06.1997
(51) Int. Cl.: C09B 29/33

(54) **Wasserunlösliche Azofarbmittel auf Basis von N-Acetoacetyldehydrothiotoluidin**
Water-insoluble azo colouring agents derived from N-acetoacetyldehydrothiotoluidine
Matières colorantes azoiques insolubles dans l'eau dérivées de N-acétoacétyldéshydrothiotoluidine

(30) Priorität: 17.06.1996 DE 19624065
(43) Veröffentlichungstag der Anmeldung: 07.01.1998
(73) Patentinhaber: Clariant GmbH, 65929 Frankfurt am Main (DE)
(72) Erfinder: Weber, Joachim, Dr., 65929 Frankfurt (DE); Metz, Hans Joachim, Dr., 64285 Darmstadt (DE)

(56) Entgegenhaltungen:
- EP-A- 0 138 761
- DE-C- 393 722

## Beschreibung

Die Erfindung betrifft Azopigmente auf Basis von N-Acetoacetyldehydrothiotoluidin und Aminobenzoesäurederivaten.

Das Deutsche Reichspatent 393 722 offenbart Azopigmente auf Basis von N-Acetoacetyldehydrothiotoluidin und Anilin sowie seine Methyl-, Methoxy-, Chlor- und Nitro-substituierten Homologen, die jedoch hinsichtlich der Temperaturstabilität, Farbstärke und Dispergierbarkeit in hochmolekularen organischen Materialien nicht den heutigen Anforderungen genügen. Ebenso genügen sie hinsichtlich Farbstärke beim Einsatz in Druckfarben nicht mehr den heutigen Anforderungen.

Der vorliegenden Erfindung lag die Aufgabe zugrunde, neue Azopigmente mit gelbem Farbton, hoher Temperaturstabilität und hoher Farbstärke zur Verfügung zu stellen, die heutigen Anforderungen an Pigmente gerecht werden.

Es wurde gefunden, daß Azopigmente auf Basis von N-Acetoacetyldehydrothiotoluidin und Aminobenzoesäurederivaten überraschenderweise die vorliegende Aufgabe lösen.

Gegenstand der vorliegenden Erfindung ist eine Verbindung der allgemeinen Formel (I) 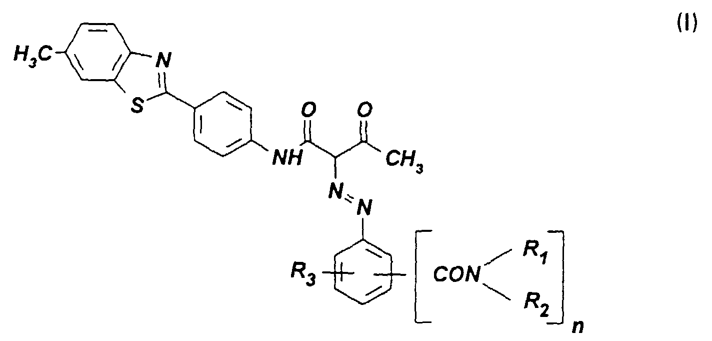 worin
- R₁ und R₂: unabhängig voneinander ein Wasserstoffatom, C₁-C₄-Alkyl, C₅-C₆-Cycloalkyl, eine Benzylgruppe, eine unsubstituierte Phenylgruppe oder eine substituierte Phenylgruppe mit 1 bis 5, vorzugsweise 1 bis 3, Substituenten aus der Gruppe C₁-C₄-Alkyl, C₁-C₄-Alkoxy, Halogen, Nitro, Cyano, Hydroxy, CF₃, CONH₂, CONH(C₅-C₆-cycloalkyl), CON(C₁-C₄-alkyl)₂, CONH(C₁-C₄-alkyl), COO(C₁-C₄-alkyl), COO(C₅-C₆-cycloalkyl) und CONH(phenyl);
- R₃: ein Wasserstoffatom, C₁-C₄-Alkyl, C₁-C₄-Alkoxy, Halogen, Nitro, Cyano, Hydroxy, CF₃, COO(C₁-C₄-alkyl) oder COO(C₅-C₆-cycloalkyl) und
- n: 1 oder 2,
bedeuten.

Von besonderem Interesse sind Verbindungen der allgemeinen Formel (I), worin
- R₁: ein Wasserstoffatom oder ein C₁-C₄-Alkyl, vorzugsweise Methyl, Ethyl, Isopropyl oder n-Butyl, eine Benzylgruppe oder eine Phenylgruppe;
- R₂: ein Wasserstoffatom, ein C₁-C₄-Alkyl, wie Methyl, Ethyl, Isopropyl oder n-Butyl, oder eine Phenylgruppe mit 1 bis 3 Substituenten aus der Gruppe C₁-C₄-Alkyl, C₁-C₄-Alkoxy, F, Cl, Br, CF₃, CONH₂, CONH(C₁-C₄-alkyl) und COO(C₁-C₄-alkyl);
- R₃: ein Wasserstoffatom,Methyl, Ethyl, Methoxy, Ethoxy, F, Cl, Br, Nitro, CF₃, COOCH₃ und COOC₂H₅; und
- n: 1 oder 2,
bedeuten.

Von besonderem Interesse sind Verbindungen der Formel (I), worin R₁ Wasserstoff, Methyl, Ethyl, Isopropyl oder n-Butyl bedeutet.

Von besonderem Interesse sind Verbindungen der Formel (I), worin R₂ Wasserstoff, Methyl, Ethyl, Isopropyl, n-Butyl, Cyclohexyl, Benzyl, Dimethylphenyl, Methoxyphenyl, Dimethoxyphenyl, Chlorphenyl, Dichlorophenyl, Dimethoxychlorophenyl, Carboxymethylphenyl, Carbonamidophenyl, Trifluormethylphenyl oder Trifluormethylchlorophenyl ist.

Von besonderem Interesse sind Verbindungen der Formel (I), worin R₃ Wasserstoff, Methyl, Ethyl, Methoxy, Ethoxy, Fluor, Chlor, Brom, Nitro, CF₃, COOCH₃ oder COOC₂H₅ ist.

Die allgemeine Formel (I) ist als idealisierte Formel zu verstehen und umfaßt auch die entsprechenden tautomeren Verbindungen sowie die möglichen Konfigurationsisomere jeder tautomeren Form. Die Verbindungen der allgemeinen Formel (I) liegen normalerweise in der Hydrazonform vor. Die allgemeine Formel (I) umfaßt deshalb vor allem auch die Hydrazonform.

Gegenstand der vorliegenden Erfindung ist auch ein Verfahren zur Herstellung der erfindungsgemäßen Verbindungen der allgemeinen Formel (I), dadurch gekennzeichnet, daß man ein oder mehrere Amine der allgemeinen Formel (II) 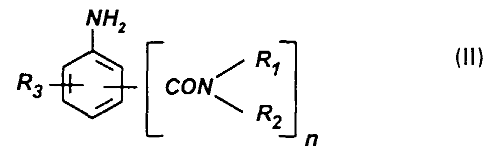 worin R₁, R₂, R₃ und n die in Formel (I) definierten Bedeutungen haben, diazotiert und im molaren Verhältnis von 1:0,9 bis 1,1, bevorzugt 1:0,95 bis 1,05, mit einer Verbindung der Formel (III), 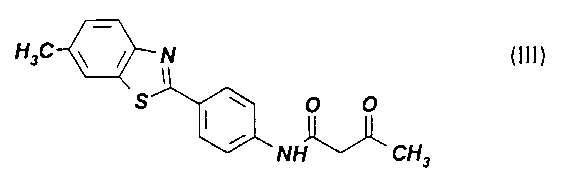 kuppelt.

Die allgemeinen Formeln (II) und (III) sind als idealisierte Formeln zu verstehen, die auch die entsprechenden tautomeren Verbindungen sowie die möglichen Konfigurationsisomere jeder tautomeren Form umfassen.
Amine der Formel (II) sind beispielsweise 4-Aminobenzoesäureamid sowie 4-Aminobenzoesäureamide, die an der 2- oder 3-Position, insbesondere an der 3-Position, einen Substituenten aus der Gruppe C₁-C₄-Alkyl, insbesondere Methyl; C₁-C₄-Alkoxy, insbesondere Methoxy; Halogen, insbesondere Chlor; COO(C₁-C₄)alkyl, insbesondere COOCH₃; Nitro oder CF₃ aufweisen. Von Interesse sind weiterhin 3-Aminobenzoesäureamid sowie 3-Aminobenzoesäureamide, die an der 4- oder 5-Position einen Substituenten aus der Gruppe C₁-C₄-Alkyl, insbesondere Methyl; C₁-C₄-Alkoxy, insbesondere Methoxy; Halogen, insbesondere Chlor; COO(C₁-C₄)alkyl, insbesondere COOCH₃; Nitro oder CF₃ aufweisen. Sowohl im Falle der 4-Aminobenzoesäureamide als auch im Falle der 3-Aminobenzoesäureamide können unabhängig von einer Substitution an der 2- oder 3-Position (im Falle der 4-Aminobenzoesäureamide) bzw. an der 4- oder 5-Position (im Falle der 3-Aminobenzoesäureamide) am Stickstoff der Amid-Gruppe ein oder zwei Substituenten aus der Gruppe C₁-C₄-Alkyl, insbesondere Methyl, Ethyl, Isopropyl oder n-Butyl, eine Benzylgruppe, eine Phenylgruppe, oder eine Phenylgruppe mit 1 bis 3 Substituenten aus der Gruppe C₁-C₄-Alkyl, insbesondere Methyl, Ethyl, Isopropyl oder n-Butyl; C₁-C₄-Alkoxy, insbesondere Methoxy; Halogen, insbesondere Chlor; CF₃; CONH₂; CONH(C₁-C₄-alkyl), wobei Alkyl insbesondere Methyl, Ethyl, Isopropyl oder n-Butyl ist; oder COO(C₁-C₄-alkyl), wobei alkyl insbesondere Methyl ist; aufweisen.

Die Herstellung der Amine der Formel (II) ist in der Literatur beschrieben, beispielsweise in Houben-Weyl Band VIII, S. 647 ff.
Vorzugsweise verwendet man 4-Aminobenzoesäureamid, 4-Aminobenzoesäuredimethylamid, 4-Aminobenzoesäure-n-butylamid, 4-Aminobenzoesäurecyclohexylamid, 4-Aminobenzoesäure-(4'-carbonsäureamid-)phenylamid, 4-Aminobenzoesäure-(3',5'-dimethoxy-4'-chlor-)phenylamid, 3-Amino-4-methylbenzoesäureamid, 3-Amino-4-methylbenzoesäuremethylamid, 3-Amino-4-methylbenzoesäure-(5'-methyl-3'-carbonsäure-n-butylamid-)phenylamid, 3-Amino-4-methoxybenzoesäureamid, 3-Amino-4-methoxybenzoesäure-(2'-chlor-5'-trifluormethyl-)phenylamid, 3-Amino-4-methoxybenzoesäure-(4'-carbonsäureamid-)phenylamid, 3-Amino-4-chlorbenzoesäureamid, 3-Amino-4-carbomethoxybenzoesäureamid, 3-Amino-4-carbomethoxybenzoesäure-(2',5'-dichlor-)phenylamid, 5-Aminoisophthalsäurebisamid.

Die Kupplungskomponente der Formel (III) ist N-Acetoacetyldehydrothiotoluidin. Die Herstellung dieser Verbindung ist in der Literatur beschrieben, beispielsweise in D.R.P. 409 949.

Die Herstellung der erfindungsgemäßen Verbindungen der Formel (I) erfolgt nach an sich bekannten Verfahren durch Kupplung der diazotierten Amine mit den genannten Kupplungskomponenten im wässrigen Medium, gegebenenfalls in Gegenwart nichtionogener, anionischer oder kationischer oberflächenaktiver Substanzen, die einen Trübungspunkt in wässrigem Medium haben können. Gegebenenfalls können auch weitere Hilfsmittel, wie natürliche oder synthetische Harze oder Harzderivate, oder übliche Lackfarben-, Druckfarben- oder Kunststoff-Additive verwendet werden. Die Kupplung kann auch ganz oder teilweise in organischen Lösungsmitteln erfolgen.

Die Kupplungsreaktion wird nach einer der üblichen Methoden im wäßrigen Medium durchgeführt, indem man
a) eine Lösung, Suspension oder Dispersion des Diazoniumsalzes zu einer Suspension oder Dispersion der Kupplungskomponente zugibt, oder
b) eine Lösung, Suspension oder Dispersion des Diazoniumsalzes und eine Lösung, Suspension oder Dispersion der Kupplungskomponente zu einer Pufferlösung oder in eine Mischdüse gleichzeitig zudosiert, oder
c) eine Lösung der Kupplungskomponente zu einer Lösung, Suspension oder Dispersion des Diazoniumsalzes zugibt, oder
d) eine Suspension oder Dispersion der Kupplungskomponente zu einer Lösung, Suspension oder Dispersion des Diazoniumsalzes zugibt.

Die Verfahrensparameter Zeit, Temperatur und pH-Wert unterscheiden sich nur wenig von denen in herkömmlichen Kupplungsverfahren und sind somit dem Fachmann bekannt.

Im erfindungsgemäßen Verfahren besonders vorteilhaft sind die Methoden a) und d).

Die erfindungsgemäßen Verbindungen der Formel (I) stellen wertvolle wasserunlösliche Farbmittel dar und können nach der Kupplungsreaktion in üblicher Weise isoliert werden. Häufig ist es zweckmäßig, die nach der Kupplungsreaktion erhaltenen Azopigmente zur Erzielung der vollen Farbstärke und einer besonders günstigen Kristallstruktur einer Nachbehandlung (Finish) zu unterwerfen. Beispielsweise kann man zu diesem Zweck die feuchten oder getrockneten Pigmente in organischen Lösungsmitteln, wie beispielsweise Pyridin, N-Methyl-2-pyrrolidon, Dimethylformamid, Dimethylsulfoxid, Alkoholen, Chlorbenzolen, Eisessig, Chinolin, Glykolen, Nitrobenzolen oder aromatischen Kohlenwasserstoffen einige Zeit, gegebenenfalls unter erhöhtem Druck und gegebenenfalls unter Zusatz von nichtionischen, anionischen oder kationischen oberflächenaktiven Substanzen, erhitzen. In einigen Fällen gelingt die Überführung in eine günstige Kristallstruktur oder die Erzielung der vollen Farbstärke auch schon durch Erhitzen mit Wasser, gegebenenfalls unter Druck und gegebenenfalls unter Zusatz von nichtionischen, anionischen oder kationischen oberflächenaktiven Substanzen, die einen Trübungspunkt in wäßrigem Medium haben können; oder von organischen Lösungsmitteln, beispielsweise der vorstehenden Art.

Die erfindungsgemäßen Verbindungen der Formel (I) eignen sich besonders zum Pigmentieren von hochmolekularen organischen Materialien, Lacken, Anstrichstoffen, Druckfarben, elektrophotographischen Tonern und Entwicklern, triboelektrisch oder elektrokinetisch versprühbaren Pulvern und Pulverlacken und Tinten. Hochmolekulare organische Materialien sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkylharze, Acrylharze, Phenoplaste, Polycarbonate, Polystyrol, Polyvinylverbindungen, insbesondere Polyvinylchlorid oder Polyvinylacetat, Polyolefine, insbesondere Polyethylen und Polypropylen, Polyacrylverbindungen, insbesondere Polyacrylnitril und Polyacrylsäureester, Polyamide, Polyurethane oder Polyester, Gummi, Casein, Silikon und Silikonharze, einzeln oder in Mischungen. Als Medium besonders bevorzugt sind Celluloseester, wie Nitrocellulose, und Polyolefine, wie Polyethylen und Polypropylen.

Es spielt dabei keine Rolle, ob die erwähnten hochmolekularen organischen Verbindungen als plastische Massen, Schmelzen oder in Form von Spinnlösungen vorliegen oder in Lacken, Anstrichstoffen oder Druckfarben enthalten sind. Je nach Verwendungszweck erweist es sich als vorteilhaft, die erfindungsgemäß erhaltenen Pigmentzubereitungen als Verschnitte oder in Form von Präparationen oder Dispersionen zu benutzen. Bezogen auf das zu pigmentierende hochmolekulare organische Material, setzt man die erfindungsgemäßen Pigmente in einer Menge von vorzugsweise 0,1 bis 10 Gew.-% ein.

Die erfindungsgemäßen Verbindungen der Formel (I) zeichnen sich durch besonders hohe Temperaturstabilität, gute Dispergierbarkeit in den hochmolekularen organischen Materialien und hohe Farbstärke aus.
Sie sind weiterhin geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (L.B. Schein, "Electrophotography and Development Physics"; Springer Series in Electrophysics 14, Springer Verlag, 2nd edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäßen Verbindungen der Formel (I) geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.
Außerdem sind die erfindungsgemäßen Verbindungen der Formel (I) als Farbmittel in Ink-Jet Tinten auf wäßriger und nichtwäßriger Basis sowie in solchen Tinten, die nach dem hot-melt-Verfahren arbeiten, geeignet.

Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen, nichtrocknenden Alkydharzes ausgewählt.

Zur Beurteilung der Eigenschaften der nach der Erfindung hergestellten Pigmente auf dem Kunststoffsektor wurden aus der Vielzahl der bekannten Kunststoffe Weichpolyvinylchlorid und Polyethylen ausgewählt.

Zur Beurteilung der Eigenschaften der nach der Erfindung hergestellten Pigmente auf dem Drucksektor wurden aus der Vielzahl der bekannten Drucksysteme ein Offsetdrucksystem auf Alkydharzbasis und ein Illustrationstiefdrucksystem auf Nitrocellulosebasis ausgewählt.

Zur Beurteilung der Eigenschaften der nach der Erfindung hergestellten Pigmente auf dem Tonersektor wurden aus der Vielzahl der bekannten Tonersysteme ein Tonersystem auf Polyesterharzbasis ausgewählt.

Zur Beurteilung der Eigenschaften der nach der Erfindung hergestellten Pigmente auf dem Pulverlacksektor wurden aus der Vielzahl der bekannten Pulverlacksysteme ein Harzsystem ausgewählt.

In den folgenden Beispielen bedeuten Teile Gewichtsteile und Prozente Gewichtsprozente.

### Herstellungsbeispiele

### Beispiel 1:

### a) Diazoniumsalzlösung

18,2 Teile 3-Amino-4-methoxybenzoesäureamid werden in 75 Volumenteilen Eisessig und 30 Volumenteilen 31 %iger Salzsäure verrührt. Nach dem Abkühlen auf 5 bis 10°C werden 13,2 Volumenteile 40 %ige Natriumnitrit-Lösung innerhalb von 5 Minuten zugetropft. Es wird 1,5 Stunden nachgerührt, die Lösung durch Filtration geklärt und der Nitritüberschuß durch Amidosulfonsäure zerstört.

### b) Lösung der Kupplungskomponente

32,4 Teile N-Acetoacetyldehydrothiotoluidin werden in 400 Volumenteilen Eisessig bei 50 bis 60°C gelöst.

### c) Kupplung

In einem Kupplungsgefäß werden die Lösung der Kupplungskomponente und 25,6 Teile einer 10 %igen wäßrigen Lösung eines Fettalkoholpolyglykolethers auf Basis eines C₁₆-C₁₈-Alkohols, umgesetzt mit ca. 25 Teilen Ethylenoxid, vorgelegt. Mit 250 Volumenteilen 4 normaler Natriumacetatlösung wird der pH-Wert auf 3,6 bis 3,7 eingestellt, dabei fällt die Kupplungskomponente aus. Diese Mischung wird innerhalb 50 bis 60 Minuten mit der Diazoniumsalzlösung versetzt. Nach beendeter Kupplung erhitzt man die Pigmentsuspension durch Einleiten von Dampf auf 98°C und hält diese Temperatur 1 Stunde. Man läßt auf 80°C abkühlen, filtriert das Pigment ab und wäscht es mit Wasser.

### d) Nachbehandlung

Der feuchte Presskuchen wird in 1100 Volumenteilen N-Methylpyrrolidon unter Rühren auf 130°C erhitzt. Nach Abkühlen auf 100°C wird das Pigment abgesaugt, mit N-Methylpyrrolidon und dann mit Aceton gewaschen und bei 65°C getrocknet. Nach dem Mahlen erhält man 46 Teile eines grünstichiggelben Pigments.
- IR-Spektrum:: 3410 cm⁻¹, 3174 cm⁻¹, 2919 cm⁻¹, 2859 cm⁻¹, 2361 cm⁻¹, 2335 cm⁻¹, 1659 cm⁻¹, 1606 cm⁻¹, 1583 cm⁻¹, 1543 cm⁻¹, 1516 cm⁻¹, 1499 cm⁻¹, 1458 cm⁻¹, 1448 cm⁻¹, 1297 cm⁻¹, 1280 cm⁻¹, 1254 cm⁻¹, 1183 cm⁻¹, 1096 cm⁻¹, 1016 cm⁻¹, 972 cm⁻¹, 951 cm⁻¹, 895 cm⁻¹, 842 cm⁻¹, 819 cm⁻¹, 613 cm⁻¹.

Verfährt man in Analogie zu dem Herstellungsbeispiel und setzt anstelle von 3-Amino-4-methoxybenzoesäureamid als Base andere Basen entsprechend nachfolgender Tabelle 1 ein, so gelangt man ebenfalls zu wertvollen Pigmenten:

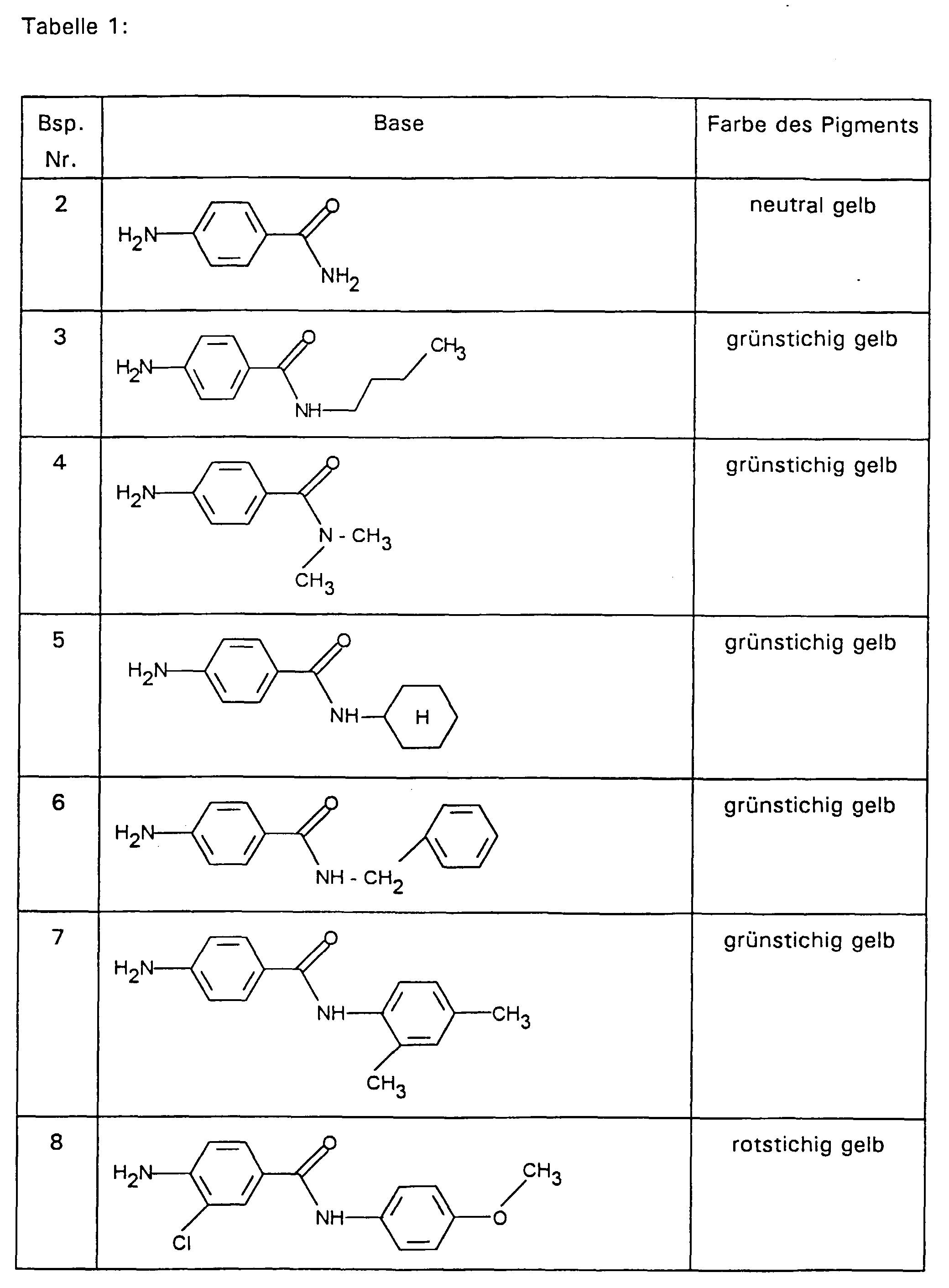

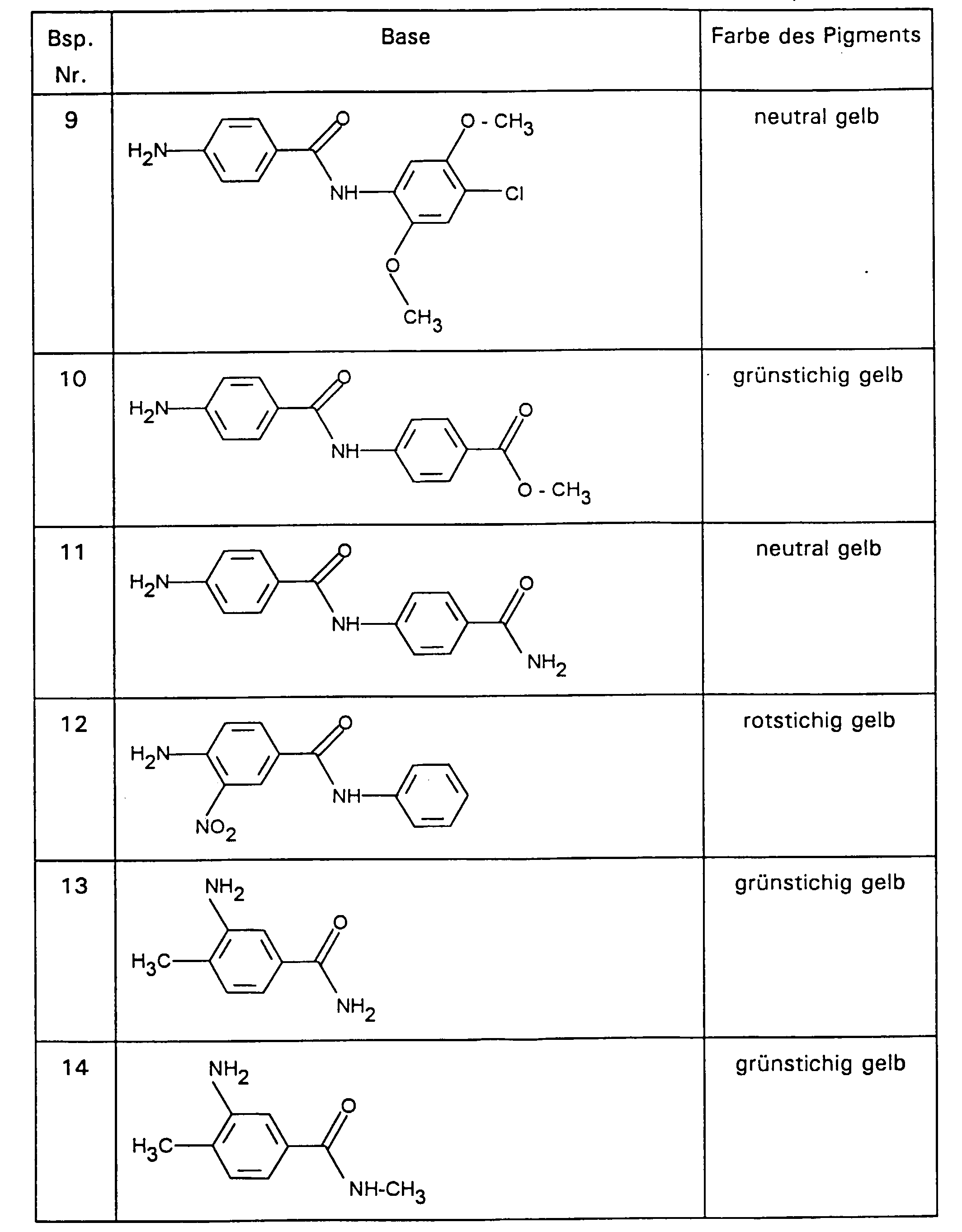

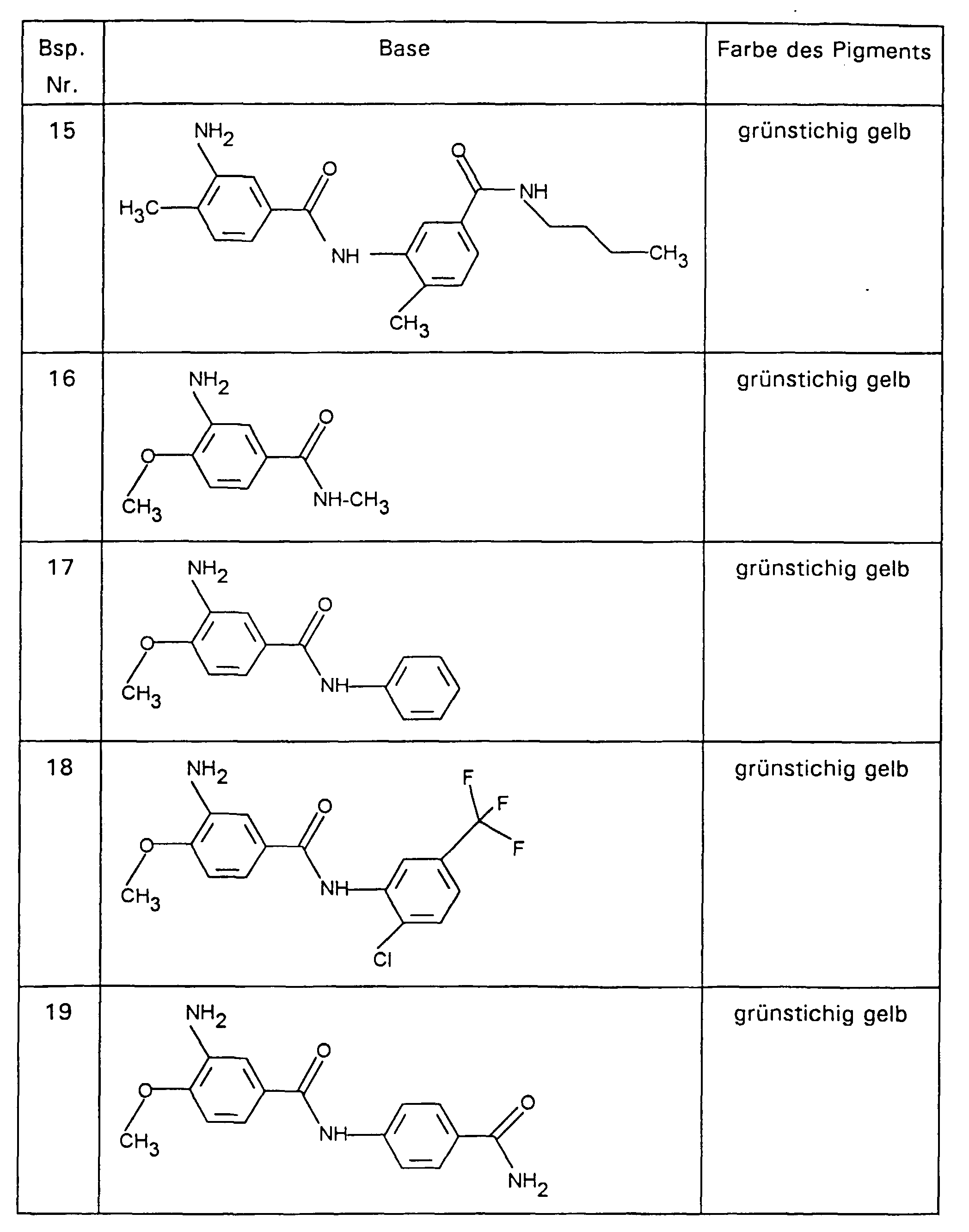

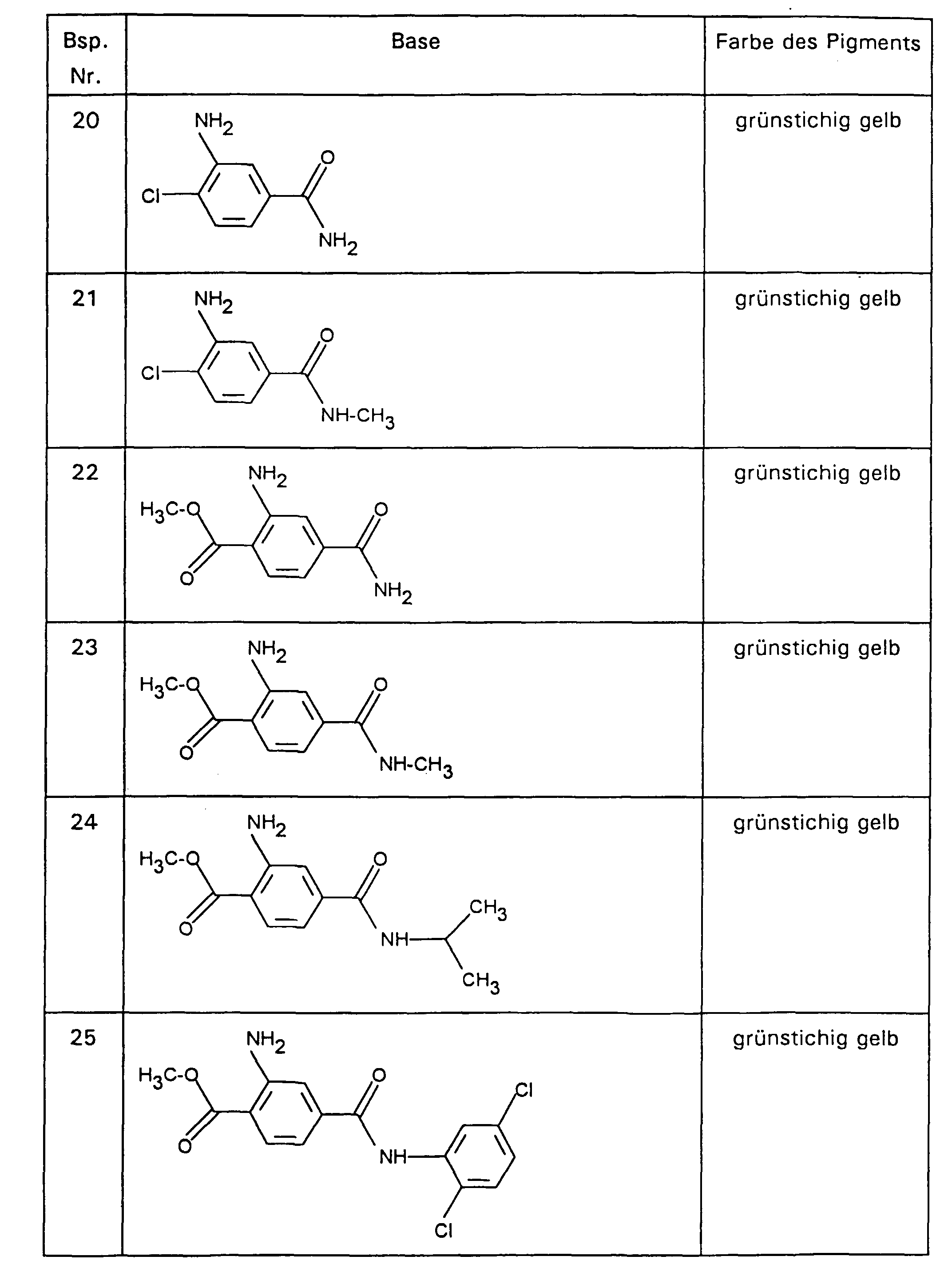

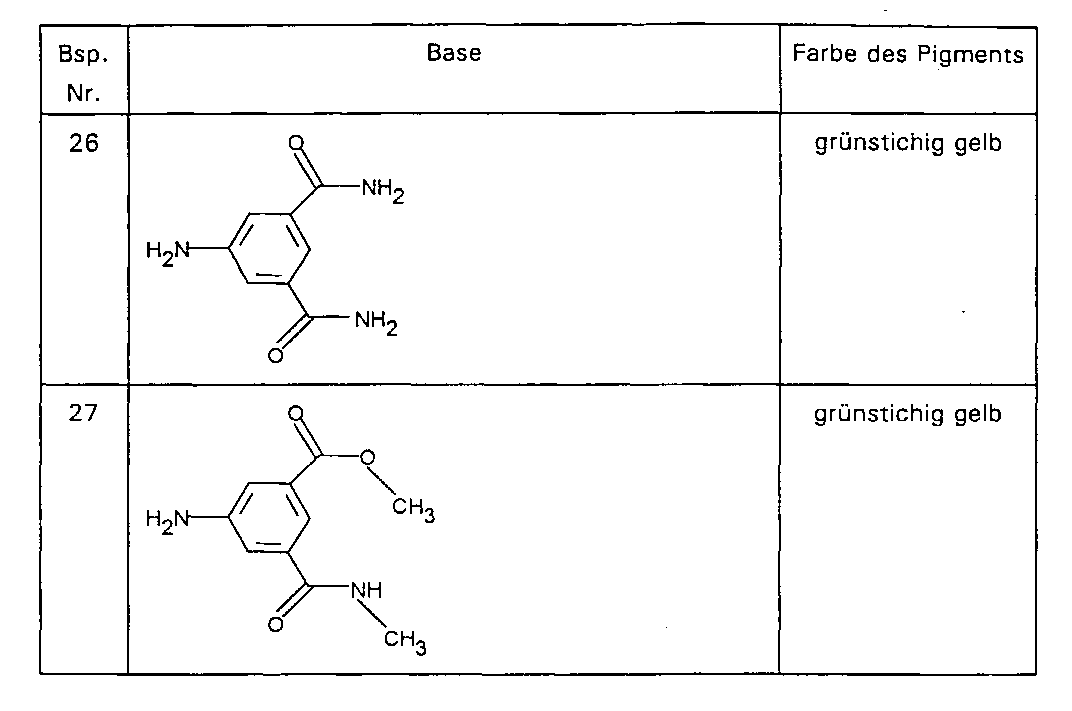

### Anwendungsbeispiele:

Das Pigment aus dem Beispiel 1 liefert im AM-Lack eine deckende und farbstarke Lackierung, die eine hohe Lichtechtheit aufweist. Im Offsetdruck und im Illustrationstiefdruck werden glänzende, transparente und farbstarke Drucke erhalten. In Weichpolyvinylchlorid wird gute Dispergierbarkeit, hohe Farbstärke und ein reiner Farbton erhalten. Die Prüfung in Polyethylen zeigt hohe Temperaturstabilität und hohe Farbstärke. Die Prüfung im Tonersystem zeigt Kompatibilität und homogene Dispergierbarkeit im Bindemittel, hohe Farbstärke und günstige Transparenz. Vorteilhaft ist insbesondere der konstante elektrostatische Einfluß auf das Tonersystem bei triboelektrischer Aufladung. Die Prüfung im Pulverlacksystem belegt die Versprühbarkeit des Lackes und dessen Abscheidung auf dem Werkstück.

Die Pigmente aus den Beispielen 2 bis 27 liefern im AM-Lack farbstarke Lackierungen mit reinen Farbtönen.

## Patentansprüche

1. Verbindung der allgemeinen Formel (I) sowie ihre tautomeren Formen und Konfigurationsisomere jeder tautomeren Form 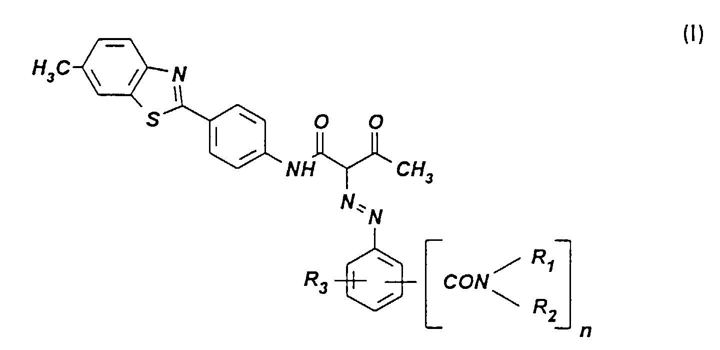 worin
R₁ und R₂ unabhängig voneinander ein Wasserstoffatom, C₁-C₄-Alkyl, C₅-C₆-Cycloalkyl, eine Benzylgruppe, eine unsubstituierte Phenylgruppe oder eine substituierte Phenylgruppe mit 1 bis 5 Substituenten aus der Gruppe C₁-C₄-Alkyl, C₁-C₄-Alkoxy, Halogen, Nitro, Cyano, Hydroxy, CF₃, CONH₂, CONH(C₅-C₆-cycloalkyl), CON(C₁-C₄-alkyl)₂, CONH(C₁-C₄-alkyl), COO(C₁-C₄-alkyl), COO(C₅-C₆-cycloalkyl) und CONH(phenyl),
R₃ ein Wasserstoffatom, C₁-C₄-Alkyl, C₁-C₄-Alkoxy, Halogen, Nitro, Cyano, Hydroxy, CF₃, COO(C₁-C₄-alkyl) oder COO(C₅-C₆-cycloalkyl) und
n 1 oder 2,
bedeuten.

2. Verbindung nach Anspruch 1, dadurch gekennzeichnet, daß
R₁ ein Wasserstoffatom oder ein C₁-C₄-Alkyl, eine Benzylgruppe oder eine Phenylgruppe;
R₂ ein Wasserstoffatom, ein C₁-C₄-Alkyl, oder eine Phenylgruppe mit 1 bis 3 Substituenten aus der Gruppe C₁-C₄-Alkyl, C₁-C₄-Alkoxy, F, Cl, Br, CF₃, CONH₂, CONH(C₁-C₄-alkyl) und COO(C₁-C₄-alkyl);
R₃ ein Wasserstoffatom, Methyl, Ethyl, Methoxy, Ethoxy, F, Cl, Br, Nitro, CF₃, COOCH₃ und COOC₂H₅; und
n 1 oder 2,
bedeuten.

3. Verbindung nach Anspruch 1 oder 2, dadurch gekennzeichnet, daß R₁ Wasserstoff, Methyl, Ethyl, Isopropyl oder n-Butyl bedeutet.

4. Verbindung nach mindestens einem der Ansprüche 1 bis 3, dadurch gekennzeichnet, daß
R₂ Wasserstoff, Methyl, Ethyl, Isopropyl, n-Butyl, Cyclohexyl, Benzyl, Dimethylphenyl, Methoxyphenyl, Dimethoxyphenyl, Chlorphenyl, Dichlorophenyl, Dimethoxychlorophenyl, Carboxymethylphenyl, Carbonamidophenyl, Trifluormethylphenyl oder Trifluormethylchlorophenyl ist.

5. Verbindung nach mindestens einem der Ansprüche 1 bis 4, dadurch gekennzeichnet, daß
R₃ Wasserstoff, Methyl, Ethyl, Methoxy, Ethoxy, Fluor, Chlor, Brom, Nitro, CF₃, COOCH₃ oder COOC₂H₅ ist.

6. Verfahren zur Herstellung einer Verbindung der Formel (I) nach mindestens einem der Ansprüche 1 bis 5, dadurch gekennzeichnet, daß man ein oder mehrere Amine der allgemeinen Formel (II) sowie ihre tautomeren Formen und Konfigurationsisomere jeder tautomeren Form 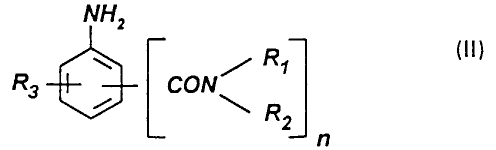 worin R₁, R₂, R₃ und n die in Formel (I) definierten Bedeutungen haben, diazotiert und im molaren Verhältnis von 1:0,9 bis 1,1, bevorzugt 1:0,95 bis 1,05, mit einer Verbindung der Formel (III) sowie ihre tautomeren Formen und Konfigurationsisomere jeder tautomeren Form 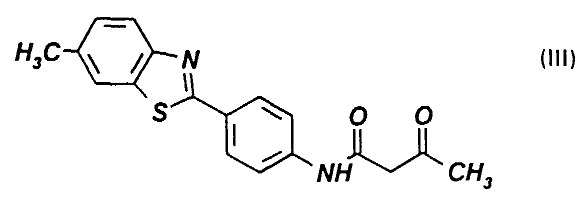 kuppelt.

7. Verfahren nach Anspruch 6, dadurch gekennzeichnet, daß man eine Lösung, Suspension oder Dispersion des diazotierten Amins der Formel (II) zu einer Dispersion oder Suspension einer Verbindung der Formel (III) zugibt, oder daß man eine Suspension oder Dispersion einer Verbindung der Formel (III) zu einer Lösung, Suspension oder Dispersion des diazotierten Amins der Formel (II) zugibt.

8. Verwendung einer Verbindung der allgemeinen Formel (I) gemäß einem oder mehreren der Ansprüche 1 bis 5 zum Pigmentieren von hochmolekularen organischen Materialien, Lacken, Anstrichstoffen, Druckfarben, elektrophotographischen Tonern und Entwicklern, triboelektrisch oder elektrokinetisch versprühbaren Pulvern und Pulverlacken, und Tinten.

9. Verwendung nach Anspruch 8, dadurch gekennzeichnet, daß das hochmolekulare organische Material ein Polyolefin, vorzugsweise Polyethylen oder Polypropylen, ist.

10. Verwendung gemäß Anspruch 8 als Farbmittel im Nitrocellulose-Illustrationstiefdruck.

## Claims

1. A compound of the formula (I) and its tautomeric forms and configurational isomers of each tautomeric form 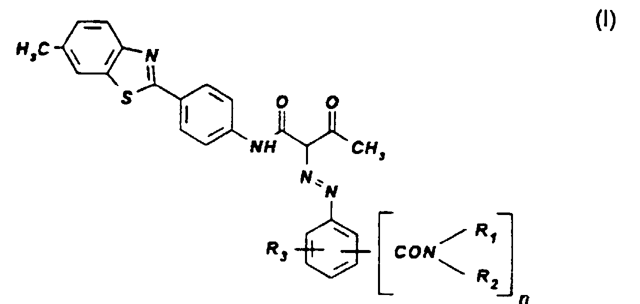 in which
R₁ and R₂ independently of one another are a hydrogen atom, C₁-C₄-alkyl, C₅-C₆-cycloalkyl, a benzyl group, an unsubstituted phenyl group or a substituted phenyl group with 1 to 5 substituents from the group consisting of C₁-C₄-alkyl, C₁-C₄-alkoxy, halogen, nitro, cyano, hydroxyl, CF₃, CONH₂, CONH(C₅-C₆-cycloalkyl), CON(C₁-C₄-alkyl)₂, CONH(C₁-C₄-alkyl), COO(C₁-C₄-alkyl), COO (C₅-C₆-cycloalkyl) and CONH(phenyl),
R₃ is a hydrogen atom, C₁-C₄-alkyl, C₁-C₄-alkoxy, halogen, nitro, cyano, hydroxyl, CF₃, COO(C₁-C₄-alkyl) or COO(C₅-C₆-cycloalkyl) and
n is 1 or 2.

2. A compound as claimed in claim 1, in which
R₁ is a hydrogen atom or a C₁-C₄-alkyl, a benzyl group or a phenyl group;
R₂ is a hydrogen atom, a C₁-C₄-alkyl, or a phenyl group with 1 to 3 substituents from the group consisting of C₁-C₄-alkyl, C₁-C₄-alkoxy, F, Cl, Br, CF₃, CONH₂, CONH(C₁-C₄-alkyl) and COO(C₁-C₄-alkyl);
R₃ is a hydrogen atom, methyl, ethyl, methoxy, ethoxy, F, Cl, Br, nitro, CF₃, COOCH₃ or COOC₂H₅; and
n is 1 or 2.

3. A compound as claimed in claim 1 or 2, in which R₁ is hydrogen, methyl, ethyl, isopropyl or n-butyl.

4. A compound as claimed in at least one of claims 1 to 3, in which
R₂ is hydrogen, methyl, ethyl, isopropyl, n-butyl, cyclohexyl, benzyl, dimethylphenyl, methoxyphenyl, dimethoxyphenyl, chlorophenyl, dichlorophenyl, dimethoxychlorophenyl, carboxymethylphenyl, carboxamidophenyl, trifluoromethylphenyl or trifluoromethylchlorophenyl.

5. A compound as claimed in at least one of claims 1 to 4, in which
R₃ is hydrogen, methyl, ethyl, methoxy, ethoxy, fluorine, chlorine, bromine, nitro, CF₃, COOCH₃ or COOC₂H₅.

6. A process for the preparation of a compound of the formula (I) as claimed in at least one of claims 1 to 5, which comprises diazotizing one or more amines of the formula (II) and their tautomeric forms and configurational isomers of each tautomeric form 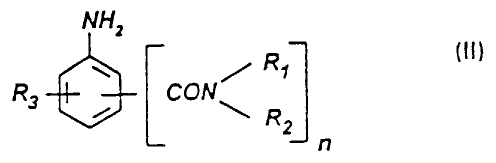 in which R₁, R₂, R₃ and n have the meanings defined in formula (I), and coupling the diazotization product with a compound of the formula (III) and its tautomeric forms and configurational isomers of each tautomeric form 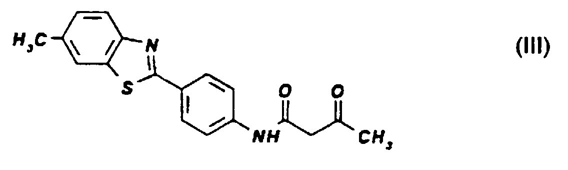 in a molar ratio of 1:0.9 to 1.1, preferably 1:0.95 to 1.05.

7. The process as claimed in claim 6, wherein a solution, suspension or dispersion of the diazotized amine of the formula (II) is added to a dispersion or suspension of a compound of the formula (III), or a suspension or dispersion of a compound of the formula (III) is added to a solution, suspension or dispersion of the diazotized amine of the formula (II).

8. The use of a compound of the formula (I) as claimed in one or more of claims 1 to 5 for pigmenting high molecular weight organic materials, paints, coating materials, printing inks, electrophotographic toners and developers, powders and powder coatings which can be sprayed triboelectrically or electrokinetically and inks.

9. The use as claimed in claim 8, wherein the high molecular weight organic material is a polyolefin, preferably polyethylene or polypropylene.

10. The use as claimed in claim 8 as a colorant in nitrocellulose illustration gravure printing.

## Revendications

1. Composé de formule générale (I) ainsi que ses formes tautomères et les isomères de configuration de chaque forme tautomère 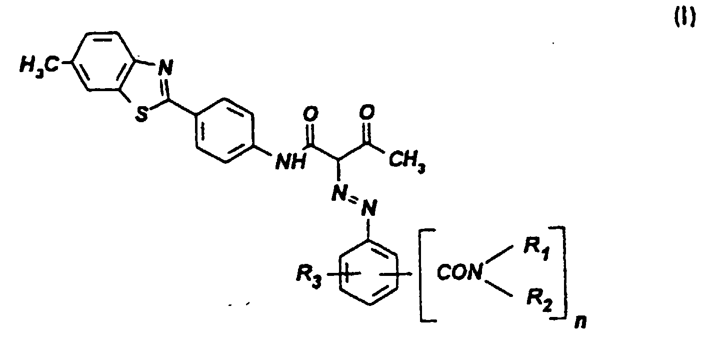 dans laquelle
R₁ et R₂ représentent indépendamment l'un de l'autre un atome d'hydrogène, un groupe alkyle en C₁ à C₄, cycloalkyle en C₅ à C₆, un groupe benzyle, un groupe phényle non substitué ou un groupe phényle substitué ayant de 1 à 5 substituants choisis parmi un groupe alkyle en C₁ à C₄, alcoxy en C₁ à C₄, un atome d'halogène, un groupe nitro, cyano, hydroxy, CF₃, CONH₂, CONH(cycloalkyle en C₅ à C₆), CON(alkyle en C₁ à C₄)₂, CONH(alkyle en C₁ à C₄), COO(alkyle en C₁ à C₄), COO(cycloalkyle en C₅ à C₆) et CONH(phényle),
R₃ représente un atome d'hydrogène, un groupe alkyle en C₁ à C₄, alcoxy en C₁ à C₄, un atome d'halogène, un groupe nitro, cyano, hydroxy, CF₃, COO(alkyle en C₁ à C₄) ou COO(cycloalkyle en C₅ à C₆) et
n représente 1 ou 2.

2. Composé selon la revendication 1, caractérisé en ce que,
R₁ représente un atome d'hydrogène ou un groupe alkyle en C₁ à C₄, un groupe benzyle ou un groupe phényle;
R₂ représente un atome d'hydrogène ou un groupe alkyle en C₁ à C₄ ou un groupe phényle ayant 1 à 3 substituants choisis parmi un groupe alkyle en C₁ à C₄, alcoxy en C₁ à C₄, F, Cl, Br, CF₃, CONH₂, CONH(alkyle en C₁ à C₄) et COO(alkyle en C₁ à C₄);
R₃ représente un atome d'hydrogène, un groupe méthyle, éthyle, méthoxy, éthoxy, F, Cl, Br, un groupe nitro, CF₃, COOCH₃ et COOC₂H₅; et
n représente 1 ou 2.

3. Composé selon la revendication 1 ou 2, caractérisé en ce que, R₁ représente un atome d'hydrogène, un groupe méthyle, éthyle, isopropyle ou n-butyle.

4. Composé selon au moins l'une des revendications 1 à 3, caractérisé en ce que,
R₂ représente un atome d'hydrogène, un groupe méthyle, éthyle, isopropyle, n-butyle, cyclohexyle, benzyle, diméthylphényle, méthoxyphényle, diméthoxyphényle, chlorophényle, dichlorophényle, diméthoxychlorophényle, carboxyméthylphényle, carbonamidophényle, trifluorométhylphényle ou trifluorométhylchlorophényle.

5. Composé selon au moins l'une des revendications 1 à 4, caractérisé en ce que,
R₃ représente un atome d'hydrogène, un groupe méthyle, éthyle, méthoxy, éthoxy, un atome de fluor, de chlore de brome, un groupe nitro, CF₃, COOCH₃ ou COOC₂H₅.

6. Procédé pour la préparation d'un composé de formule (I) selon au moins l'une des revendications 1 à 5, caractérisé en ce que, l'on effectue la diazotation d'une ou de plusieurs amines de formule générale (II) ainsi que de ses formes tautomères et des isomères de configuration de chaque forme tautomère 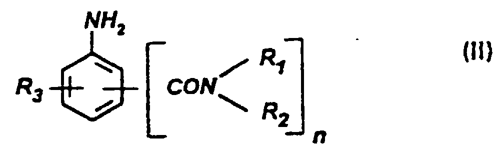 dans laquelle R₁, R₂, R₃ et n ont les significations définies à la formule (I) et la copulation dans le rapport molaire de 1:0,9 à 1,1, de préférence 1:0,95 à 1,05, avec un composé de formule (III) ainsi que ses formes tautomères et les isomères de configuration de chaque forme tautomère

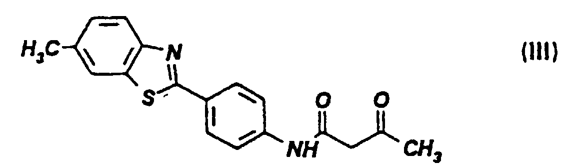

7. Procédé selon la revendication 6, caractérisé en ce que, l'on ajoute une solution, une suspension ou une dispersion de l'amine diazotée de formule (II) à une dispersion ou une suspension d'un composé de formule (III), ou en ce que l'on ajoute une suspension ou une dispersion d'un composé de formule (III) à une solution, une suspension ou une dispersion de l'amine diazotée de formule (II).

8. Utilisation d'un composé de formule générale (I) selon une ou plusieurs des revendications 1 à 5 pour la pigmentation de matériaux organiques de molécularité élevée, pour les peintures, les substances des peintures, les colorants d'impression, les toners et les révélateurs électrophotographiques, les poudres et peintures en poudre pulvérisables par effet électrocinétique ou triboélectrique et les encres.

9. Utilisation selon la revendication 8, caractérisée en ce que le matériau organique à molécularité élevée est une polyoléfine, de préférence le polyéthylène ou le polypropylène.

10. Utilisation selon la revendication 8 comme colorant dans l'impression en creux d'illustration sur nitrocellulose.
